# EUROPÄISCHE PATENTSCHRIFT

(11) **EP 0 738 105 B1**
(45) Veröffentlichungstag und Bekanntmachung des Hinweises auf die Patenterteilung: **10.06.1998**
(21) Anmeldenummer: 95903707.8
(22) Anmeldetag: 29.12.1994
(51) Int. Cl.: A01K 93/00, A01K 91/06

(54) **ANGELVORRICHTUNG**
FISHING DEVICE
DISPOSITIF DE PECHE

(30) Priorität: 29.12.1993 AT 2647/93
(43) Veröffentlichungstag der Anmeldung: 23.10.1996
(73) Patentinhaber: Riegerbauer, Hermann, 8430 Leibnitz (AT)
(72) Erfinder: Riegerbauer, Hermann, 8430 Leibnitz (AT)
(74) Vertreter: Brauneiss, Leo, Dipl.Ing.
(86) Internationale Anmeldenummer: AT9400208
(87) Internationale Veröffentlichungsnummer: WO9517812

(56) Entgegenhaltungen:
- WO-A-94/15456
- FR-A- 1 391 967
- GB-A- 815 077
- US-A- 2 595 947
- US-A- 2 924 907
- US-A- 2 933 848
- US-A- 3 748 775

## Beschreibung

Die Erfindung betrifft eine Angelvorrichtung mit einem Schwimmkörper, dessen Oberseite eine langgstreckte Form aufweist und an dessen Unterseite ein sich abwärts erstreckendes Schwert mit einem Belastungsgewicht vorgesehen ist, mit Befestigungsmitteln für ein wenigstens einen Angelhaken aufweisendes Vorfach, und mit weiteren Befestigungsmitteln für eine Zugschnur, die außermittig in Bezug auf die Größe der Seitenfläche des Schwimmkörpers vorgesehen sind.

Eine derartige Angelvorrichtung ermöglicht es, den Schwimmkörper mit dem daran befindlichen Vorfach samt Angelhaken an gewünschten bestimmten Stellen des Gewässers verweilen zu lassen. Wird die Angelvorrichtung beispielsweise bei einem strömenden Gewässer verwendet und steht der Fischer am Ufer desselben, so ist es nicht erforderlich, die Zugschnur mit dem Schwimmkörper und dem daran befindlichen Vorfach langsam einzuziehen und anschließend neu auszuwerfen. Der Schwimmkörper stellt sich infolge der außermittigen Befestigung der Zugschnur mit seiner Längsachse quer zur Strömungsrichtung und die von der Gewässerströmung auf den Schwimmkörper ausgeübte Kraft weist dadurch eine Kraftkomponente auf, die den Schwimmkörper zu einem Ufer des strömenden Gewässers treibt, wobei der Schwimmkörper bei einem Fixieren der Zugschnur in der durch die Länge derselben definierten Lage verbleibt.

Eine derartige Angelvorrichtung ist aus der US-A-3 181 266 bekannt geworden. Bei dieser bekannten Angelvorrichtung weist das Schwert einen sich in Längsrichtung desselben erstreckenden Durchgangsschlitz auf, an dessen einer Schmalseite ein Arm derart schwenkbar befestigt ist, daß er wahlweise an der einen oder an der anderen Seite des Schwertes aus dem Durchgangsschlitz auszutreten vermag. Am freien Ende des Armes ist eine Klemmvorrichtung für die Zugschnur vorgesehen, die somit wahlweise auf der einen oder anderen Seite des Schwertes befestigbar ist. Die Zugschnur ist von der Klemmvorrichtung durch die Windungen einer an der Spitze des Schwertes befestigten Spule hindurchgeführt und bildet im Anschluß daran das Vorfach.

Nachteilig ist bei dieser bekannten Anordnung, daß die Befestigung der Zugschnur zwar wahlweise auf der einen oder auf der anderen Seite des Schwimmkörpers erfolgen kann, in Bezug auf die Größe der Seitenfläche des Schwimmkörpers jedoch stets nur an einer bestimmten Stelle, nämlich dort, wo sich am Arm die Klemmvorrichtung befindet.

Aus der US-A-2,933.848 ist eine Angelvorrichtung der eingangs beschriebenen Art bekanntgeworden, bei welcher die Zugschnut im Befestigungsbereich dreigeteilt ist, wobei ein Teil an der Oberseite des Schwimmkörpers in dessen hinterem Bereich an drei verschiedenen Befestigungsstellen befestigt werden kann, der zweite Teil an der Oberseite des Schwimmkörpers in dessen vorderem Bereich und der dritte Teil im vorderen Bereich des Schwertes. Die Befestigung der Zugschnur ist bei dieser bekannten Vorrichtung nicht derart veränderbar, daß sie an verschiedene Strömungsverhältnisse und an die vom Fischer gewünschten Bedingungen angepaßt werden kann.

Aus der GB-A-815.077 ist eine Angelvorrichtung bekannt geworden, die aus einem zigarrenförmigen Schwimmkörper und aus einem von der Unterseite des Schwimmkörpers abstehenden Schwert besteht. Der Schwimmkörper ist mit einem rundum verlaufenden Flansch versehen, der in der Nähe der Wasseroberfläche zu liegen kommt und der Öffnungen 5 zur Befestigung der Zugschnur und des Vorfaches aufweist. Diese Befestigungsmöglichkeit sichert nicht die erforderliche Stabilität der Angelvorrichtung, diese pendelt vielmehr in unerwünschter Weise aus.

Die US-A-3,748.775 offenbart eine Angelvorrichtung, bei welcher das Schwert mit einem Schwimmkörper um eine etwa in der Mitte desselben befindliche lotrechte Achse schwenkbar verbunden ist. Das Vorfach ist bei dieser bekannten Anordnung um einen von der Oberseite des Schwimmkörpers abstehenden schrägen Zapfen geführt.

Die vorliegende Erfindung hat sich zur Aufgabe gestellt, die bekannten Angelvorrichtungen dahingehend zu verbessern, daß sie universell bei Auftreten verschiedener Strömungsverhältnisse und insbesondere verschieden starker Strömungen und bei verschiedenen Fischereibedingungen einsetzbar sind.

Zur Lösung dieser Aufgabe schlägt die Erfindung vor, daß die Befestigungsmittel für die Zugschnur einen vom Schwert seitlich abstehenden Träger enthalten, an dem mehrere in Richtung der Längsachse des Schwimmkörpers hintereinander angeordnete, vorzugsweise von Öffnungen zum Hindurchführen der Zugschnur gebildete Befestigungsstellen für diese Zugschnur vorgesehen sind. Durch die Möglichkeit, die Zugschnur an verschiedenen Stellen zu befestigen, kann der Bewegungsablauf des Schwimmkörpers verändert und an die Stärke der Strömung sowie an die jeweiligen Fischereibedingungen angepaßt werden. Aus dem gleichen Grund ist es von Vorteil, wenn die Befestigungsmittel für das Vorfach mehrere in Richtung der Längsachse des Schwimmkörpers hintereinander angeordnete, vorzugsweise von Öffnungen zum Hindurchführen des Vorfaches gebildete Befestigungsstellen enthalten. Es hat sich als zweckmäßig erwiesen, wenn sich diese Befestigungsstellen für das Vorfach auf der Unterseite des sich vom Schwimmkörper abwärts erstreckenden Schwertes, vorzugsweise auf einer vom Schwert nach unten abstehenden Zunge, befinden.

Optimale Bewegungsabläufe des Schwimmers ergeben sich dann, wenn die Befestigungseinrichtungen für die Zugschnur, ausgehend von einem Ende des langgestreckten Schwimmkörpers, im Bereich des ersten Drittels der Längsachse angeordnet sind.

Die gewünschte Bewegung des Schwimmkörpers läßt sich dadurch verbessern, daß gemäß einem weiteren Merkmal der Erfindung zumindest die Seitenbegrenzung einer Längsseite des Schwimmkörpers, nämlich dort, wo die Befestigungseinrichtung für die Zugschnur vorgesehen ist, von der Oberseite des Schwimmkörpers ausgehend einwärts abgeschrägt ist.

Aus demselben Grund ist es von Vorteil, wenn die im wesentlichen parallel zur Oberseite des Schwimmkörpers verlaufende Querschnittsfläche des Schwimmkörpers und/oder des Schwertes stromlinienförmig ausgebildet sind. Dabei können Schwimmkörper und/oder Schwert bogenförmige Längsseiten aufweisen, die sich vorzugsweise an wenigstens einem Ende in einer Spitze vereinigen.

Um den beispielsweise in einem fließenden Gewässer mit sich bewegender Oberfläche befindlichen Schwimmkörper vom Ufer aus, wo sich der Fischer befindet, besser erkennen zu können, kann erfindungsgemäß ein von der Oberseite des Schwimmkörpers abstehendes vorspringendes Sichtzeichen vorgesehen sein. Wird die erfindungsgemäße Angelvorrichtung zum Nachtfischen eingesetzt, so ist es zweckmäßig, wenn das Sichtzeichen mit Befestigungsmitteln für eine Lichtquelle versehen ist. Diese Lichtquelle kann beispielsweise aus einem an sich bekannten Knickstäbchen mit Phosphorfüllung bestehen, das nach dem Abknicken im Dunkeln leuchtet.

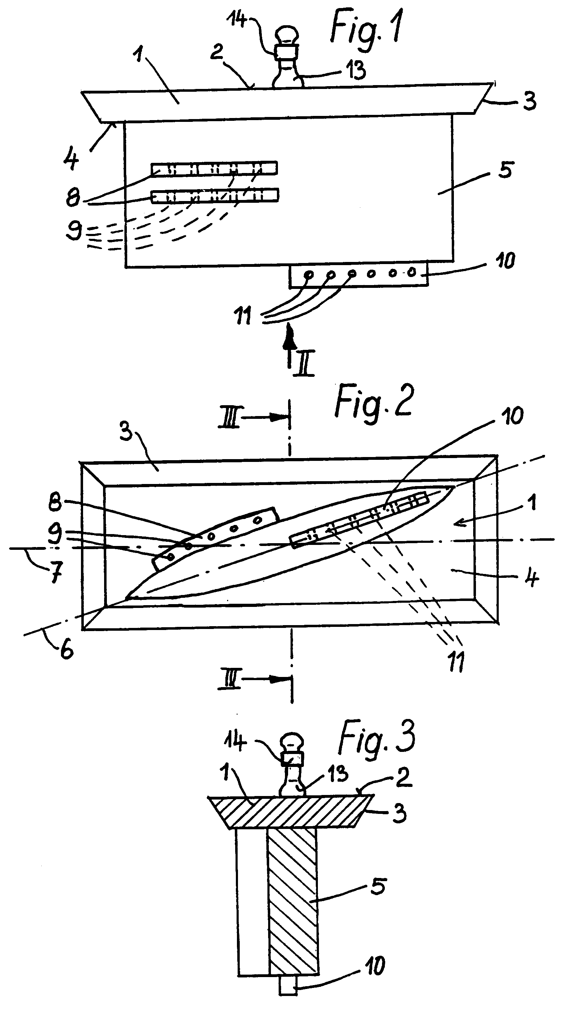

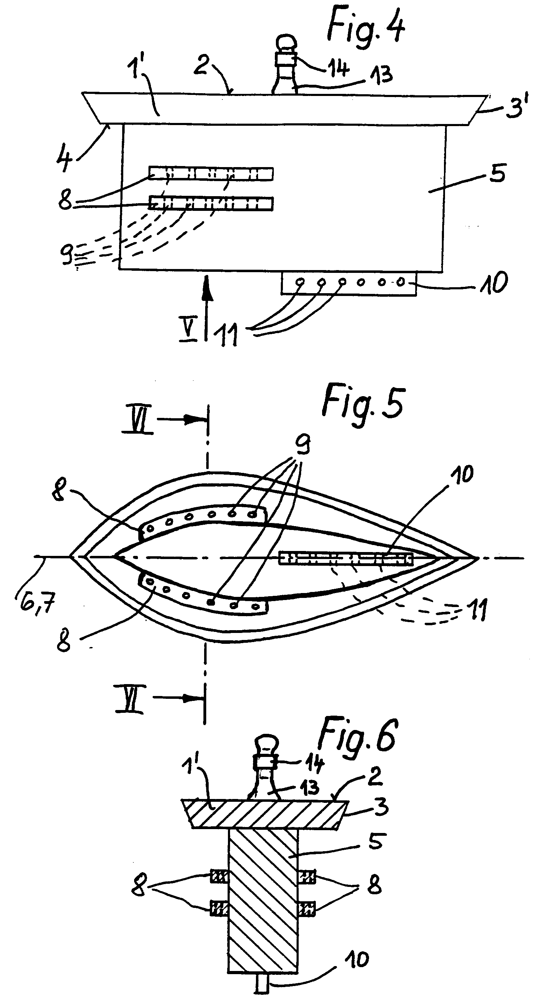

In der Zeichnung ist die Erfindung anhand von Ausführungsbeispielen schematisch veranschaulicht. Fig. 1 zeigt eine Seitenansicht einer ersten Ausführungsform der erfindungsgemäßen Angelvorrichtung. Fig.2 stellt eine Unteransicht in Richtung des Pfeiles II in Fig.1 dar und Fig.3 zeigt einen Schnitt nach der Linie III - III in Fig.2. Fig.4 stellt eine zweite Ausführungsform der erfindungsgemäßen Angelvorrichtung in Seitenansicht dar. Fig.5 ist eine Unteransicht in Richtung des Pfeiles V in Fig.4 und Fig.6 ein Schnitt nach der Linie VI - VI in Fig.5.

Die in den Fig.1 bis 3 dargestellte Ausführungsform der erfindungsgemäßen Angelvorrichtung weist einen Schwimmkörper 1 auf, der eine langgestreckte Form besitzt. Bei dieser Ausführungsform ist die Oberseite 2 des Schwimmkörpers 1 rechteckig ausgebildet. Die Seitenbegrenzungen 3 des Schwimmkörpers sind, von der Oberseite 2 ausgehend, einwärts abgeschrägt. Der Schwimmkörper besteht aus einem Material mit einem spezifischen Gewicht kleiner als 1, beispielsweise aus Holz oder Polystyrol.

An der Unterseite 4 des Schwimmkörpers 1 ist ein sich abwärts erstreckendes Schwert 5 befestigt, dessen im wesentlichen parallel zur Oberseite 2 des Schwimmkörpers verlaufende Querschnittsfläche, wie aus Fig.2 hervorgeht, stromlinienförmig ausgebildet ist. Wie weiters aus Fig.2 hervorgeht, verläuft bei dieser Ausführungsform die Längsmittelebene 6 des Schwertes 5 schräg zur Längsachse 7 des Schwimmkörpers.

An einer Seite des Schwertes 5 sind zwei in unterschiedlichen Abständen von der Oberseite 2 des Schwimmkörpers 1 etwa parallel zu dieser Oberseite verlaufende Träger 8 vorgesehen, die mehrere Öffnungen 9 aufweisen, die Befestigungsstellen für eine Zugschnur bilden, welche mit der Angelrute in Verbindung steht und welche wahlweise durch eine dieser Öffnungen 9 hindurchgeführt werden kann. Je nachdem, an welchen der beiden Träger 8 die Zugschnur befestigt wird, lassen sich bestimmte Stellungen bzw. Bewegungen des Schwimmkörpers 1 erzielen. Bei gespannter Zugschnur wird nämlich entweder der Schwimmkörper durch die Strömung in seiner Lage gehalten oder gekippt und wird dadurch wieder zurückgetrieben.

Durch die Wahl einer bestimmten Öffnung für die Befestigung der Zugschnur an einem Träger 8 kann eine Anpassung an die Stärke und den Verlauf der Strömung vorgenommen werden.

Von der Unterseite des Schwertes 5 steht eine Zunge 10 ab, die gleichfalls mit in Richtung der Längsachse 7 des Schwimmkörpers 1 hintereinander angeordneten Öffnungen 11 versehen ist, in welchen das Vorfach befestigt werden kann. Durch Wahl einer geeigneten Öffnung kann auch die Befestigung des Vorfaches und damit die Lage des Angelhakens dem Strömungsverlauf und der Strömungsstärke angepaßt werden.

Von der Oberseite 2 des Schwimmkörpers 1 steht ein Vorsprung 13 ab, der dazu dient, den in einem strömenden Gewässer treibenden Schwimmkörper 1 vom Ufer aus besser erkennen zu können. Der Vorsprung kann jede beliebige Form aufweisen.

Um die Lage des Schwimmkörpers auch bei Nacht erkennen zu können, kann an diesem Vorsprung, beispielsweise mittels eines Gummiringes 14, eine nicht dargestellte Lichtquelle befestigt werden. Diese Lichtquelle besteht beispielsweise aus einem an sich bekannten Knickstäbchen, das mit einer Phosphorfüllung versehen ist, die bei einem Abknicken des Stäbchens zu leuchten beginnt. Selbstverständlich sind auch andere Befestigungen der Lichtquelle am Vorsprung und auch andere Lichtquellen verwendbar.

Die in den Fig.4 bis 6 dargestellte Ausführungsform unterscheidet sich von jener nach den Fig.1 bis 3 lediglich dadurch, daß der Schwimmkörper 1' von bogenförmigen Längsseiten 3' begrenzt ist, die an beiden Enden des langgestreckten Schwimmkörpers 1' sich in einer Spitze 12 vereinigen. Wie aus Fig.5 ersichtlich ist, weisen sowohl der Schwimmkörper 1' als auch das Schwert 5 eine im Querschnitt parallel zur Oberseite 2 des Schwimmkörpers 1' tropfenförmige und somit stromlinienförmige Gestalt auf, wobei sich die größte Querschnittsbreite im Bereich der Befestigungseinrichtungen befindet.

Wie weiters aus Fig.5 ersichtlich ist, liegt bei dieser Ausführungsform die Längsachse 7 des Schwimmkörpers 1' in der Längsmittelebene 6 des Schwertes 5, Schwimmkörper 1' und Schwert 5 sind somit in Bezug auf die Längsachse 7 symmetrisch ausgebildet. Ferner sind an beiden in Bezug auf diese Längsachse 7 gegenüberliegenden Seiten des Schwertes 5 Träger 8 mit Öffnungen 9 vorgesehen. Diese Ausführungsform ermöglicht somit die Befestigung der Zugschnur an verschiedenen Seiten des Schwertes 5 und damit den Einsatz der erfindungsgemäßen Angelvorrichtung von beiden Ufern eines strömenden Gewässers aus.

## Patentansprüche

1. Angelvorrichtung mit einem Schwimmkörper (1,1'), dessen Oberseite (2) eine langgestreckte Form aufweist, und an dessen Unterseite (4) ein sich abwärts erstreckendes Schwert (5) mit einem Belastungsgewicht vorgesehen ist, mit Befestigungsmitteln (10,11) für ein wenigstens einen Angelhaken aufweisendes Vorfach, und mit weiteren Befestigungsmitteln (8,9) für eine Zugschnur, die außermittig in Bezug auf die Größe der Seitenfläche des Schwimmkörpers (1,1') vorgesehen sind, dadurch gekennzeichnet, daß die Befestigungsmittel für die Zugschnur einen vom Schwert (5) seitlich abstehenden, Träger (8) enthalten, an dem mehrere in Richtung der Längsachse (7) des Schwimmkörpers (1,1') hintereinander angeordnete, vorzugsweise von Öffnungen (9) gebildete Befestigungsstellen für die Zugschnur vorgesehen sind.

2. Angelvorrichtung nach Anspruch 1, dadurch gekennzeichnet, daß die Befestigungsmittel (8,9) für die Zugschnur, ausgehend von einem Ende des langgestreckten Schwimmkörpers (1,1'), im Bereich des ersten Drittels der Längsaches (7) angeordnet sind.

3. Angelvorrichtung nach Anspruch 1, dadurch gekennzeichnet, daß die weiteren Befestigungsmittel für das Vorfach mehrere in Richtung der Längsachse (7) des Schwimmkörpers hintereinander angeordnete, vorzugsweise von Öffnungen (11) zum Hindurchführen des Vorfaches gebildete Befestigungsstellen enthalten.

4. Angelvorrichtung nach Anspruch 3, dadurch gekennzeichnet, daß die Befestigungsstellen für das Vorfach auf der Untereseite des sich vom Schwimmkörper (1,1') abwärts erstreckenden Schwertes (5), vorzugsweise auf einer vom Schwert (5) nach unten abstehenden Zunge (10), vorgesehen sind.

5. Angelvorrichtung nach Anspruch 1, dadurch gekennzeichnet, daß zumindest die Seitenbegrenzung (3,3') einer Längsseite des Schwimmkörpers (1,1') von dessen Oberseite (2) ausgehend einwärts abgeschrägt ist.

6. Angelvorrichtung nach Anspruch 1, dadurch gekennzeichnet, daß die im wesentlichen parallel zur Oberseite (2) des Schwimmkörpers (1,1') verlaufende Querschnittsfläche des Schwimmkörpers und/oder des Schwertes (5) stromlinienförmig ausgebildet sind.

7. Angelvorrichtung nach Anspruch 1, dadurch gekennzeichnet, daß Schwimmkörper (1') und/oder Schwert (5) bogenförmige Längsseiten aufweisen, die sich vorzugsweise an wenigstens einem Ende in einer Spitze (12) vereinigen.

8. Angelvorrichtung nach einem der Ansprüche 1 bis 7, dadurch gekennzeichnet, daß der Schwimmkörper (1,1') und das Schwert (5) in Bezug auf die Längsachse (7) des Schwimmkörpers symmetrisch ausgebildet sind, und daß an in Bezug auf die Längsachse (7) gegenüberliegenden Seiten des Schwimmkörpers (1,1') oder des Schwertes (5) Befestigungsmittel (8,9) für die Zugschnur vorgesehen sind.

9. Angelvorrichtung nach einem der Ansprüche 1 bis 7, dadurch gekennzeichnet, daß die im wesentlichen senkrecht zur Oberseite (2) des Schwimmkörpers (1,1') verlaufende Längsmittelebene (6) des Schwertes (5) schräg zur Längsachse (7) des Schwimmkörpers (1,1') verläuft.

10. Angelvorrichtung nach Anspruch 1, dadurch gekennzeichnet, daß ein von der (2) Oberseite (2) des Schwimmkörpers (1,1') abstehendes vorspringendes Sichtzeichen (13) vorgesehen ist.

11. Angelvorrichtung nach Anspruch 10, dadurch gekennzeichnet, daß das Sichtzeichen (13) mit Befestigungsmitteln (14) für eine Lichtquelle versehen ist.

## Claims

1. A fishing device comprising a float (1, 1') whose upper surface (2) has an elongate form and whose underside (4) is provided with a downwardly extending blade (5) with a loading weight, fixing means (10, 11) for a front section having at least one fishing hook, and further fixing means (8, 9) for a fishing line which are arranged off-centre in relation to the extent of the lateral surface of the float (1, 1'), characterised in that the fixing means for the fishing line comprise a carrier (8) projecting laterally from the blade (5) and provided with a plurality of fixing points for the fishing line arranged one behind the other in the direction of the longitudinal axis (7) of the float (1, 1') and preferably constituted by openings (9).

2. A fishing device according to claim 1, characterised in that the fixing means (8, 9) for the fishing line, starting from one end of the elongate float (1, 1'), are arranged in the region of the first third of the longitudinal axis (7).

3. A fishing device according to claim 1, characterised in that the further fixing means for the front section comprise a plurality of fixing points arranged one behind the other in the direction of the longitudinal axis (7) of the float and preferably constituted by openings (11), through which the front section is guided.

4. A fishing device according to claim 3, characterised in that the fixing points for the front section are provided on the underside of the blade (5) extending downwards from the float (1, 1'), preferably on a tongue (10) projecting downwards from the blade (5).

5. A fishing device according to claim 1, characterised in that at least the lateral boundary (3, 3') of a longitudinal side of the float (1, 1') is inclined inwards, starting from the upper surface (2) thereof.

6. A fishing device according to claim 1, characterised in that the cross-sectional area of the float and/or the blade (5), extending substantially parallel to the upper surface (2) of the float (1, 1'), is streamlined.

7. A fishing device according to claim 1, characterised in that the float (1') and/or the blade (5) have curved longitudinal sides preferably coming to a point (12) at at least one end.

8. A fishing device according to any one of claims 1 to 7, characterised in that the float (1, 1') and the blade (5) are symmetrical in relation to the longitudinal axis (7) of the float, and in that fixing means (8, 9) for the fishing line are provided on opposite sides of the float (1, 1') or the blade (5) in relation to the longitudinal axis (7).

9. A fishing device according to any one of claims 1 to 7, characterised in that the longitudinal central plane (6) of the blade (5), extending substantially perpendicularly to the upper surface (2) of the float (1, 1'), extends obliquely to the longitudinal axis (7) of the float (1, 1').

10. A fishing device according to claim 1, characterised in that a projecting marker (13) is provided which extends upwards from the upper surface (2) of the float (1, 1').

11. A fishing device according to claim 10, characterised in that the marker (13) is provided with fixing means (14) for a light source.

## Revendications

1. Dispositif de pêche avec un flotteur (1, 1'), dont la face supérieure (2) affecte une forme oblongue et dont la face inférieure (4) présente en débordement vers le bas une dérive (5) équipée d'un lest, avec des moyens de fixation (10, 11) d'un bas de ligne présentant au moins un hameçon, et avec d'autres moyens de fixation (8, 9) d'une ligne, agencés de façon excentrée sur la face latérale du flotteur (1, 1'), caractérisé en ce que les moyens de fixation de la ligne comportent un support (8) dépassant latéralement de la dérive (5) et comprenant plusieurs points de fixation de la ligne, de préférence des orifices (9), agencés les uns derrière les autres dans la direction de l'axe longitudinal (7) du flotteur (1,1').

2. Dispositif de pêche selon la revendication 1, caractérisé en ce que les moyens de fixation (8, 9) de la ligne sont situés dans le premier tiers de l'axe longitudinal (7) en partant d'une extrémité du flotteur oblong (1, 1').

3. Dispositif de pêche selon la revendication 1, caractérisé en ce que les autres moyens de fixation du bas de ligne comportent plusieurs points de fixation, de préférence des orifices (11) pour insérer le bas de ligne, lesdits points de fixation étant agencés les uns derrière les autres dans la direction de l'axe longitudinal (7) du flotteur.

4. Dispositif de pêche selon la revendication 3, caractérisé en ce que les points de fixation du bas de ligne sont prévus sur la face inférieure de la dérive (5) agencée en débordement sous le flotteur (1, 1'), de préférence sur une languette (10) dépassant du bas de la dérive (5).

5. Dispositif de pêche selon la revendication 1, caractérisé en ce qu'au moins le rebord (3, 3') d'un grand côté du flotteur (1, 1') est incliné vers l'intérieur en partant de la face supérieure (2) dudit flotteur.

6. Dispositif de pêche selon la revendication 1, caractérisé en ce que les surfaces transversales du flotteur et/ou de la dérive (5), qui sont sensiblement parallèles à la face supérieure (2) du corps de flotteur (1, 1'), ont un profil hydrodynamique.

7. Dispositif de pêche selon la revendication 1, caractérisé en ce que les grands côtés du flotteur (1') et/ou de la dérive (5) sont bombés et se rejoignent de préférence à au moins une extrémité en formant une pointe (12).

8. Dispositif de pêche selon l'une quelconque des revendications 1 à 7, caractérisé en ce que le flotteur (1, 1') et la dérive (5) sont symétriques par rapport à l'axe longitudinal (7) du flotteur et en ce que des moyens de fixation (8, 9) de la ligne sont prévus sur des côtés du flotteur (1,1') ou de la dérive (5) opposés par rapport à l'axe longitudinal (7).

9. Dispositif de pêche selon l'une quelconque des revendications 1 à 7, caractérisé en ce que le plan longitudinal médian (6) de la dérive (5), qui est sensiblement perpendiculaire à la face supérieure (2) du flotteur (1, 1'), forme un angle avec l'axe longitudinal (7) du flotteur (1, 1').

10. Dispositif de pêche selon la revendication 1, caractérisé en ce qu'il comprend un repère (13) en saillie sur la face supérieure (2) du flotteur (1, 1').

11. Dispositif de pêche selon la revendication 10, caractérisé en ce que le repère (13) est doté de moyens de fixation (14) susceptibles de recevoir une source lumineuse.
